# FASCICULE DE BREVET EUROPEEN

(11) **EP 3 608 134 B1**
(45) Date de publication et mention de la délivrance du brevet: **04.05.2022**
(21) Numéro de dépôt: 19185310.0
(22) Date de dépôt: 09.07.2019
(51) Int. Cl.: B60J 5/04, E05B 77/04

(54) **AGENCEMENT POUR OUVRANT DE VÉHICULE MAINTENANT L'OUVRANT FERMÉ EN CAS DE CHOC**
ANORDNUNG FÜR FAHRZEUGÖFFNUNGSELEMENT, DIE DAS ÖFFNUNGSELEMENT IM FALL EINES AUFPRALLS GESCHLOSSEN HÄLT
ARRANGEMENT FOR A VEHICLE DOOR KEEPING THE DOOR CLOSED IN THE EVENT OF A CRASH

(30) Priorité: 07.08.2018 FR 1857354
(43) Date de publication de la demande: 12.02.2020
(73) Titulaire: Renault s.a.s, 92100 Boulogne Billancourt (FR)
(72) Inventeur: MARME, Philippe, 75013 PARIS (FR); PRUVOST, Laurent, 28260 Bercheres sur Vesgre (FR)
(74) Mandataire: Renault Group

(56) Documents cités:
- DE-A1-102012 000 452
- FR-A1- 2 970 680
- JP-A- 2014 214 536
- JP-B2- 3 353 678

## Description

La présente invention porte sur un agencement pour un ouvrant. L'invention porte aussi sur un ouvrant comprenant un tel agencement. L'invention porte encore sur un véhicule comprenant un tel agencement ou un tel ouvrant. L'invention porte enfin sur un procédé de fonctionnement d'un tel ouvrant.

Un véhicule, en particulier un véhicule automobile, de l'état de la technique est généralement doté, en particulier sur chaque porte latérale, d'une commande d'ouverture extérieure de la porte latérale, par exemple de type poignée. La commande d'ouverture extérieure est généralement agencée sur un panneau extérieur de la porte concernée. Une action sur cette commande d'ouverture extérieure entraîne, par l'intermédiaire d'un système d'entraînement, l'activation d'une serrure de la porte latérale engendrant l'ouverture de la porte.

Seulement en cas de choc, en particulier de choc latéral sur la porte, le panneau extérieur de la porte se déforme vers l'intérieur du véhicule du fait de la compression générée par le choc. Le système d'entraînement et/ou la commande d'ouverture extérieure sont alors impactés ce qui peut engendrer l'équivalent d'une action sur la commande d'ouverture extérieure, qui se traduit par une ouverture involontaire de la porte.

Ainsi, bien que la commande d'ouverture extérieure n'ait pas été sollicitée, il peut en résulter une ouverture de la porte inopportune qui s'avère dangereuse et contraire aux exigences réglementaires. Il peut s'ensuivre que le véhicule ne peut être ainsi commercialisé. En effet, il est souhaitable qu'une porte déformée par un choc demeure fermée afin d'assurer sa fonction de protection des occupants du véhicule. JP2014214536A décrit une serrure apte à être désolidarisée d'une tringle reliée à une poignée, en cas de choc.

Le but de l'invention est de fournir un système d'entraînement remédiant aux inconvénients ci-dessus. En particulier, l'invention propose un système d'entraînement simple, fiable et économique participant à un maintien fermé d'un ouvrant en cas de choc.

Pour atteindre cet objectif, l'invention porte sur un agencement pour un ouvrant, notamment un ouvrant de véhicule automobile, notamment un ouvrant de type porte latérale, l'agencement comprenant :
- une serrure commandant l'ouverture d'un tel ouvrant,
- un levier d'actionnement de la serrure pivotant au niveau d'une base du levier d'actionnement, dans un premier sens vers une position de repos du levier d'actionnement dans laquelle la serrure bloque un tel ouvrant, et dans un deuxième sens vers une position d'ouverture du levier d'actionnement dans laquelle la serrure rend apte la libération d'un tel ouvrant,
- une commande d'ouverture d'un tel ouvrant, notamment une commande d'ouverture extérieure,
- une tringle de transmission de mouvement comprenant une première partie reliée à la commande d'ouverture d'un tel ouvrant et une deuxième partie reliée au levier d'actionnement de la serrure,
   la tringle de transmission et/ou le levier d'actionnement étant agencés de sorte qu'en cas de choc sur une paroi d'un tel ouvrant, notamment en cas de choc sur un panneau extérieur d'un tel ouvrant, le levier d'actionnement est entraîné dans le premier sens, la première partie de la tringle de transmission présente un angle par rapport à la deuxième partie de la tringle de transmission de sorte à ce qu'un choc sur une paroi d'un tel ouvrant engendre un déplacement et/ou un effort sur la tringle de transmission, l'angle se fermant davantage ou s'ouvrant davantage de sorte à entraîner le levier d'actionnement de la serrure dans le premier sens.

La première partie de la tringle de transmission peut présenter une première extrémité pliée à 90 degrés ou sensiblement à 90 degrés.

La deuxième partie de la tringle de transmission peut présenter une deuxième extrémité pliée en U.

Le levier d'actionnement peut comprendre une tête de levier d'actionnement disposée à l'opposé de la base du levier d'actionnement, la tête étant dotée d'un orifice, notamment un orifice de type trou oblong, coopérant avec la deuxième partie de la tringle de transmission, notamment la deuxième extrémité pliée en U.

La tringle de transmission peut être conformée de sorte que la première partie et/ou la deuxième partie de la tringle de transmission s'étende parallèlement ou sensiblement parallèlement à une paroi d'un tel ouvrant. La tringle de transmission, notamment la première partie de la tringle de transmission, peut être conformée de sorte à s'étendre à une distance comprise entre 5 mm et 15 mm d'une paroi d'un tel ouvrant.

L'angle peut être un angle aigu.

L'invention porte encore sur un ouvrant, notamment un ouvrant de véhicule automobile, notamment ouvrant de type porte latérale, comprenant une paroi d'ouvrant, notamment un panneau extérieur, l'ouvrant comprenant un agencement tel que défini précédemment.

L'invention porte encore sur un véhicule, notamment un véhicule automobile, comprenant un ouvrant tel que défini précédemment ou un agencement tel que défini précédemment.

En cas de choc sur l'ouvrant, une deuxième extrémité de la deuxième partie de la tringle de transmission peut se déplacer selon la direction verticale du véhicule, ou sensiblement selon la direction verticale, vers le haut.

En cas de choc sur l'ouvrant, la tringle de transmission peut pivoter, notamment autour d'une direction longitudinale du véhicule, au niveau d'une première extrémité de la première partie de la tringle de transmission.

L'invention porte encore sur un procédé de fonctionnement d'un ouvrant tel que défini précédemment, le procédé comprenant en cas de choc sur l'ouvrant :
- une étape d'appui sur la paroi de l'ouvrant et de déformation de la paroi de l'ouvrant sous l'effet de l'appui,
- une étape de déplacement de la tringle de transmission en conséquence de la déformation de la paroi de l'ouvrant,
   le déplacement entraînant le levier d'actionnement dans le premier sens.

Ces objets, caractéristiques et avantages de la présente invention seront exposés en détail dans la description suivante d'un mode de réalisation faite à titre non-limitatif en relation avec les figures jointes parmi lesquelles :
La figure 1 est une vue schématique d'un véhicule selon un mode de réalisation de l'invention.
La figure 2 est une vue en coupe selon un plan vertical et transversal d'un agencement selon un mode de réalisation de l'invention dans lequel une porte latérale gauche du véhicule est rendue visible.
La figure 3 est une vue en perspective d'une tringle de transmission orientée dans le repère du véhicule selon un mode de réalisation de l'invention.

La direction selon laquelle le véhicule se déplace en ligne droite est définie comme étant la direction longitudinale X. Par convention, la direction perpendiculaire à la direction longitudinale, située dans un plan parallèle au sol, est nommée direction transversale Y. La troisième direction, perpendiculaire aux deux autres, est nommée direction verticale Z.

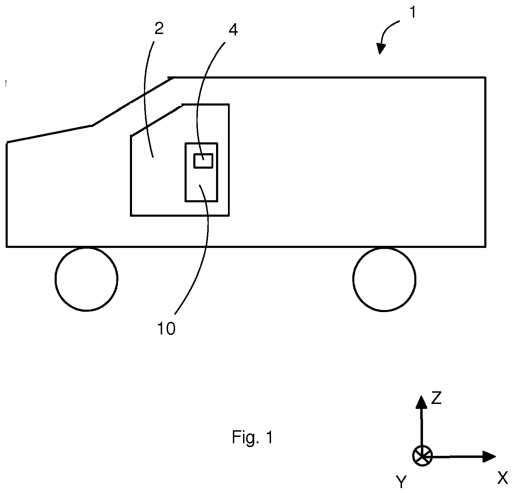

La figure 1 illustre un mode de réalisation d'un véhicule, par exemple un véhicule automobile 1. Le véhicule automobile 1 comprend au moins un ouvrant, par exemple une porte latérale 2. Bien que la porte latérale 2 illustrée sur la figure 1 représente schématiquement une porte latérale côté conducteur ou côté passager avant, la porte latérale 2 peut être une porte latérale arrière destinée à des passagers arrière c'est-à-dire placés derrière ou sensiblement derrière le conducteur et éventuellement le ou les passagers avant. Evidemment, plusieurs portes latérales arrière peuvent être agencées d'un même côté du véhicule automobile 1. L'ouvrant peut encore être une porte battante arrière ou de coffre du véhicule.

La porte latérale 2 comprend un agencement 10 qui va être explicité par la suite.

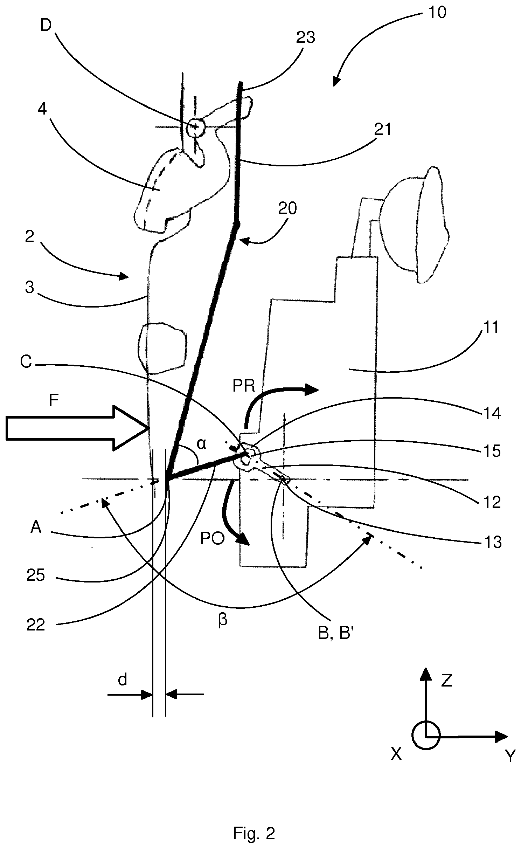

Comme illustré plus précisément sur la figure 2, l'agencement 10 comprend une serrure 11 commandant l'ouverture de la porte latérale 2. La serrure 11 comprend un élément de blocage, aussi qualifié de pêne, coopérant avec une gâche prévue sur la structure de caisse du véhicule. L'agencement 10 comprend également un levier d'actionnement 12 de la serrure 11. Le levier d'actionnement 12 commande l'état de l'élément de blocage pour verrouiller ou déverrouiller la serrure, et ainsi permettre respectivement de maintenir fermé l'ouvrant ou de permettre l'ouverture de l'ouvrant.

Le levier d'actionnement 12 est relié par sa base à un arbre 13 de rotation permettant d'entraîner un changement d'état de la serrure 11. Ledit arbre 13 de rotation est monté solidaire à rotation du levier d'actionnement 12, par exemple il s'étend le long d'un axe B parallèle ou sensiblement parallèle à la direction longitudinale X. Ainsi, le levier d'actionnement 12 peut pivoter dans un premier sens (illustré par une flèche) vers une position de repos PR du levier d'actionnement 12 dans laquelle la serrure 11 bloque la porte latérale 2. Ce premier sens est le sens horaire sur la figure 2. Le levier d'actionnement 12 peut pivoter dans un deuxième sens (illustré par une autre flèche) vers une position d'ouverture PO du levier d'actionnement 12 dans laquelle la serrure 11 libère la porte latérale 2. Ce deuxième sens, opposé au premier sens, est le sens anti horaire sur la figure 2. A noter que sur la figure 2, le levier d'actionnement 12 se trouve en position de repos PR ou sensiblement en position de repos PR. Bien entendu pour un ouvrant situé du côté opposé, cela est par exemple le cas d'une porte latérale située sur le côté droit du véhicule, les premier et second sens sont alors opposés à ceux précédemment mentionnés.

L'agencement 10 comprend encore une commande d'ouverture de la porte latérale 2, par exemple une commande d'ouverture extérieure 4.

Par exemple, la commande d'ouverture extérieure 4 pivote autour d'un axe D parallèle ou sensiblement parallèle à la direction longitudinale X. Dans le cas d'une utilisation d'un autre type de commande, tel que cela pourrait être par exemple le cas d'une commande avec un renvoi de mouvement, l'axe de pivotement peut alors être parallèle ou sensiblement parallèle à la direction transversale Y. L'agencement 10 comprend encore une tringle de transmission 20 entre la commande d'ouverture extérieure 4 et le levier d'actionnement 12 de la serrure 11.

La tringle de transmission 20 comprend une première partie 21 reliée à la commande d'ouverture extérieure 4 par un premier moyen de fixation. Par exemple, ce premier moyen est tel que le pivotement de la commande d'ouverture extérieure 4 autour de son axe D, c'est-à-dire l'action de commande d'ouverture de la porte latérale 2, engendre une translation selon la direction verticale Z, ou sensiblement selon cette direction, vers le bas, de la tringle de transmission 20. Par exemple, le premier moyen de fixation comprend un arbre coopérant avec un trou.

La tringle de transmission 20 comprend une deuxième partie 22 reliée au levier d'actionnement 12 de la serrure 11 par un deuxième moyen de fixation.

En cas de pivotement de la commande extérieure d'ouverture 4 autour de son axe D, la translation vers le bas qui en résulte de la tringle 20, plus précisément la translation de sa deuxième partie 22 vers le bas, entraîne le levier d'actionnement 12 dans le deuxième sens. Autrement dit, le levier d'actionnement 12 pivote dans le sens anti horaire vers la position d'ouverture PO ce qui libère la porte latérale 2 en ouverture.

Ainsi, la tringle de transmission 20 et/ou le levier d'actionnement 12 sont agencés de sorte qu'en cas de choc F sur une paroi de la porte latérale 2, en particulier sur un panneau extérieur 3, le levier d'actionnement 12 est entraîné dans le premier sens. Autrement dit, la tringle de transmission 20 et/ou le levier d'actionnement 12 sont agencés de sorte qu'en cas de choc F engendrant un déplacement du panneau extérieur 3 au contact de la tringle de transmission 20, le levier d'actionnement 12 pivote, ou est incité à pivoter dans le premier sens, vers la position de repos PR.

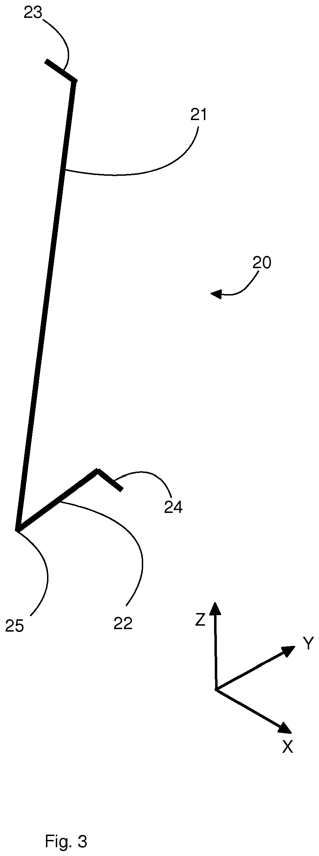

De préférence, la première partie 21 de la tringle de transmission 20 présente une première extrémité 23 pliée à 90 degrés, ou sensiblement à 90 degrés. Comme illustré sur la figure 3, la première extrémité 23 est par exemple de type agrafe quart de tour, par exemple s'étendant selon la direction longitudinale X ou sensiblement selon cette direction, constitue, au moins partiellement, le premier moyen de fixation à la commande d'ouverture extérieure 4.

De préférence, la deuxième partie 22 de la tringle de transmission 20 présente une deuxième extrémité 24, par exemple courbée et/ou pliée en U avec des angles d'environ 90 degrés. Selon une variante de réalisation, la deuxième extrémité 24 peut aussi comprendre un profil de pliage de type en S ou en L. Comme illustré sur la figure 3, la deuxième extrémité 24 s'étend selon la direction longitudinale X ou sensiblement selon cette direction, créant un retour selon cette direction. Cette deuxième extrémité 24 constitue, au moins partiellement, le deuxième moyen de fixation au levier d'actionnement 12. En effet, le levier d'actionnement 12 comprend une tête 14 disposée à l'opposé de la base du levier d'actionnement 12. De préférence, un orifice 15 est ménagé dans la tête 14, par exemple un orifice 15 de type trou oblong. Cet orifice 15 coopère avec la deuxième extrémité 24 pliée de l'ordre de 90 degrés et constituent à eux deux le deuxième moyen de fixation. Plus précisément, la deuxième extrémité 24 pliée traverse l'orifice 15 de la tête 14. Il est à noter que plusieurs types de liaisons sont envisageables pour lier la commande d'ouverture extérieure 4 à la première partie 21 comme par exemples une agrafe un quart de tour, une tringle crantée, une extrémité de tringle de forme en U ou en S. La deuxième partie 22 peut être fixée au levier 12 d'actionnement de la serrure par un moyen choisi parmi ceux précédemment énumérés.

De préférence, en cas de choc F sur l'ouvrant, la deuxième extrémité 24 de la deuxième partie 22 de la tringle de transmission 20 se déplace selon la direction verticale Z du véhicule, ou sensiblement selon la direction verticale Z, vers le haut.

De préférence, en cas de choc F sur l'ouvrant, la tringle de transmission 20 pivote, notamment autour de la direction longitudinale X du véhicule, au niveau d'une première extrémité 23 de la première partie 21 de la tringle de transmission 20.

Par exemple, la tringle de transmission 20 est une tige de section circulaire conformée. Dans ce cas, la cote la plus petite de l'orifice 15, par exemple le diamètre de l'orifice 15, est supérieure au diamètre de la section de la tringle de transmission 20. En effet, un jeu significatif entre la tringle de transmission 20 et l'orifice 15 est laissé de manière à rendre aisé l'insertion de la deuxième partie 22, en particulier la deuxième extrémité 24 pliée, dans l'orifice 15. Cette étape de montage peut alors être simple et rapide. En outre, en cas de déplacement de la tringle de transmission 20 vers l'intérieur du véhicule automobile 1 suite à un choc F entraînant le déplacement du panneau extérieur 3 jusqu'au contact de la tringle de transmission 20, la deuxième extrémité 24 est déplacée au sein de l'orifice 15, en particulier en cas d'orifice 15 oblong, sensiblement selon la direction transversale Y vers l'intérieur du véhicule. Il s'ensuit un déplacement du levier d'actionnement 12 dans le premier sens, c'est-à-dire vers la position de repos PR du levier d'actionnement 12 par rapport à la serrure 11. La porte latérale 2 reste alors bloquée, autrement dit fermée par le maintien à l'état verrouillé de la serrure 11.

De plus, l'orifice 15 offre une réserve de course apte à absorber des dispersions géométriques qui dépendent de la longueur de la tringle de transmission 20 et de la position, par exemple selon la direction verticale Z, entre la commande d'ouverture extérieure 4 et la serrure 11. Ainsi, aucune portion de la course d'ouverture de la serrure 11 n'est « consommée » tant que le levier d'actionnement 12 est, ou est sensiblement, en position de repos PR.

De préférence, la tringle de transmission 20 est conformée de sorte que la première partie 21 s'étende parallèlement ou sensiblement parallèlement au panneau extérieur 3. A noter que ce panneau extérieur 3 est par exemple en tôle d'acier ou d'aluminium. Alternativement ou en complément, la deuxième partie 22 de la tringle de transmission 20 s'étend perpendiculairement ou sensiblement perpendiculairement au panneau extérieur 3 par exemple.

De préférence, la tringle de transmission 20, en particulier la première partie 21, est conformée de sorte à s'étendre à une distance d comprise entre 5 mm et 15 mm du panneau extérieur 3.

La première partie 21 de la tringle de transmission 20 rejoint la deuxième partie 22 au niveau d'une courbure ou pli 25 (point A sur la figure 2). La première partie 21 présente un angle α par rapport à la deuxième partie 22 au niveau de ce pli 25. Ainsi, la tringle de transmission 20 comprend un pli 25, par exemple formant un angle α aigu. Le pli 25 est apte à transmettre un effort selon la direction transversale Y, ou sensiblement selon cette direction, au levier d'actionnement 12 lors du choc F de direction transversale ou sensiblement transversale. Par exemple le pli 25 est rigide et se déforme de manière négligeable. De préférence, l'angle α est un angle aigu.

Comme évoqué précédemment, en cas de choc F sur le panneau extérieur 3, le panneau extérieur 3 se déplace et/ou se déforme. Le panneau extérieur 3 vient alors au contact et/ou engendre un effort sur la tringle de transmission 20, en particulier au niveau du pli 25 placé derrière ou juste derrière le panneau extérieur 3.

Alternativement, selon le mode de réalisation illustré sur la figure 2, en cas de choc F, l'angle α du pli 25 se ferme de sorte à entraîner le levier d'actionnement 12 de la serrure 11 dans le premier sens. De plus, le choc F a pour effet de faire se déplacer selon la direction verticale Z, la première partie 21 de la tringle de transmission 20 vers le bas et la deuxième extrémité 24 vers le haut, engendrant via sa liaison avec le levier d'actionnement 12, un pivotement du levier d'actionnement 12 dans le premier sens, vers la position PR de la serrure 11.

De plus, en cas de choc F sur la porte latérale 2, le pivotement dans le premier sens du levier d'actionnement 12 est accentué par le fait que la deuxième extrémité 24 de la deuxième partie 22 de la tringle de transmission 20 se déplace selon la direction verticale Z du véhicule, ou sensiblement selon la direction verticale Z, vers le haut. En complément ou alternativement, en cas de choc F sur la porte latérale 2, la tringle de transmission 20 pivote, en particulier autour de la direction longitudinale X du véhicule, au niveau de la première extrémité 23 de la première partie 21 de la tringle de transmission 20 accentuant là encore le pivotement dans le premier sens du levier d'actionnement 12.

Dans le mode de réalisation particulier illustré sur la figure 2, à l'état initial, le point A et le point B' d'intersection de l'axe B avec un plan vertical et transversal parallèle au plan de coupe de la figure 2, se trouvent alignés sur un axe, ou sensiblement sur un axe parallèle à la direction transversale Y. Un point C est sensiblement le centre du deuxième moyen de fixation. Dans cet état initial, en position de repos PR, le triangle ACB' comprend en partie sommitale, en C, un angle obtus β. A noter que le segment AC s'étend, ou s'étend sensiblement, dans un plan vertical et transversal.

Lors d'un choc latéral selon la direction transversale Y, le panneau extérieur 3 de carrosserie vient en contact avec la tringle de transmission 20, les points A et B' tendent alors à se rapprocher selon la direction transversale Y. Ce rapprochement tend à déplacer le point C selon la direction vertical Z, vers le haut, ce qui contraint le levier d'actionnement 12 à garder sa position initiale de verrouillage de la serrure 11.

Après le choc, l'écart selon la direction transversale Y entre le panneau extérieur 3 et un caisson intérieur de porte dans lequel se trouve la serrure 11 est réduit. Le panneau extérieur 3 reste généralement en appui contre la tringle de transmission 20, en particulier en appui sur le pli 25, de sorte que la serrure 11 est maintenue en position de fermeture ou repos PR par la tringle de transmission 20. En effet, le contact panneau extérieur 3 contre la tringle de transmission 20 bloque le levier d'actionnement 12 dans le premier sens, sens opposé à la libération de la serrure 11. A l'état initial ou repos, l'angle β est de préférence inférieur voire très inférieur à 180° de sorte à contraindre le levier d'actionnement dans sa position repos PR et éviter l'ouverture de la serrure 11.

Cet agencement 10 offre la possibilité de réaliser le montage dans la porte latérale 2 dans un ordre permettant un gain de temps en usine. En outre, l'agencement 10 permet d'éviter tout montage erroné, notamment concernant la tringle de transmission 20 et/ou le levier d'actionnement 12, tel que par exemple une course d'ouverture de la serrure 11 en partie entamée.

Ainsi, l'ordre de montage peut débuter par le montage de la tringle de transmission 20 sur la serrure 11, puis installer la serrure 11 au niveau du caisson de la porte latérale 2, éventuellement sans serrage définitif, ce qui présente un gain de temps. La tringle de transmission 20 peut déjà avoir été montée sur la commande d'ouverture extérieure 4 au niveau de sa première extrémité 23 de type quart de tour, par exemple en temps masqué pour ne pas retarder la chaîne de montage. S'ensuit alors, en dernier, le serrage de la serrure 11 via une patte de maintien ou prémaintien autorisant un serrage « mains libres » d'un opérateur.

Un mode d'exécution d'un procédé de fonctionnement selon l'invention est décrit ci-après.

Le procédé de fonctionnement de la porte latérale 2 comprend en cas de choc F selon la direction transversale Y ou sensiblement transversale sur la porte latérale 2 :
- une étape d'appui sur le panneau extérieur 3 et de déformation du panneau extérieur 3 sous l'effet de l'appui,
- une étape de déplacement de la tringle de transmission 20 en conséquence de la déformation du panneau extérieur 3, le déplacement entraînant le levier d'actionnement 12 dans le premier sens.

En cas de choc, le panneau extérieur 3 est enfoncé, la tringle de transmission 20 entraîne le levier d'actionnement 12 vers le haut sur la figure 2, soit le sens opposé au déclenchement de la serrure 11. La porte latérale 2 ne s'ouvre alors pas pendant ou suite au choc F.

Ainsi, c'est la forme de la tringle de transmission 20 qui assure la fonction anti ouverture de la porte latérale 2. La tringle de transmission 20 étant généralement une pièce spécifique à chaque véhicule et/ou à chaque porte, la tringle de transmission est conformée de sorte à entrer en contact en premier avec le panneau extérieur 3 lors du choc F. La tringle de transmission 20 soumise au contact du panneau extérieur 3 entraîne le levier d'actionnement 12 de la serrure 11 dans le sens opposé à l'ouverture, c'est-à-dire le premier sens, vers la position de repos PR.

En remarque, la solution selon l'invention atteint donc l'objet recherché d'empêcher l'ouverture intempestive de la porte 2 lorsque cette porte 2 subit un choc F latéral, en particulier un choc F déformant le panneau extérieur 3 vers l'intérieur du véhicule et présente les avantages suivants:
- Elle peut facilement être industrialisée car la fabrication et/ou la modification de la tringle de transmission est aisée et rapide et fait appel à des moyens peu onéreux, par exemple une programmation numérique pour sa réalisation ;
- Elle est simple et ne nécessite pas de pièce supplémentaire tout en renforçant ou raidissant le système d'entraînement entre la commande d'ouverture extérieure 4 et la serrure 11 ;
- Elle permet un gain en masse du système d'entraînement entre la commande d'ouverture extérieure 4 et la serrure 11 ;
- Elle peut s'adapter à toute forme intérieure de porte en adaptant la conformation de la tringle de transmission ;
- Elle peut être utilisée sur différents types de véhicules automobiles, notamment camions, camionnettes, légers ou industriels, ou encore véhicules de transport en commun ;
- Elle améliore la sécurité du véhicule équipé de cette solution, le ou les passagers étant protégés par le maintien de la porte 2 fermée, même en cas de chocs successifs sur la porte 2, par exemple lors d'un carambolage et/ou lors d'un sur-accident ;
- Le véhicule, en particulier le véhicule automobile 1, équipé de cette solution répond efficacement aux exigences normatives et/ou réglementaires, en particulier aux exigences liées aux chocs latéraux.

L'invention est particulièrement bien adaptée à un véhicule automobile doté d'une porte latérale comprenant une commande d'ouverture extérieure reliée à une serrure par un système d'entraînement de type tringle. Elle porte sur un agencement au sein d'une telle porte. Elle porte également sur une porte comprenant un tel agencement. Elle porte enfin sur un véhicule comprenant une telle porte et/ou un tel agencement. Elle porte encore sur un procédé de fonctionnement d'une telle porte.

Enfin, bien que la solution ait été décrite pour une porte 10 latérale soumise à un choc F principalement latéral, elle pourrait également convenir à une porte latérale arrière pour les chocs latéraux, et / ou une porte de façade arrière en cas de choc arrière d'un véhicule. En effet, un véhicule de type fourgon et/ou utilitaire qui dispose d'au moins une porte arrière comprenant une commande d'ouverture extérieure, par exemple une commande d'ouverture extérieure de type poignée reliée à une serrure par un système d'entraînement de type tringle, peut bénéficier des avantages de la solution en cas de choc arrière.

De préférence, lorsque la porte latérale 2 du véhicule automobile 1 est dans sa configuration initiale non déformée c'est-à-dire n'ayant subi aucun choc ou dommage, la tringle de transmission 20, en particulier son pli 25, n'interfère pas avec le panneau extérieur 3.

## Revendications

1. Agencement (10) pour un ouvrant, notamment un ouvrant de véhicule automobile (1), notamment un ouvrant de type porte latérale (2), l'agencement (10) comprenant :
- une serrure (11) commandant l'ouverture d'un tel ouvrant,
- un levier d'actionnement (12) de la serrure (11) pivotant au niveau d'une base du levier d'actionnement (12), dans un premier sens vers une position de repos (PR) du levier d'actionnement (12) dans laquelle la serrure (11) bloque un tel ouvrant, et dans un deuxième sens vers une position d'ouverture (PO) du levier d'actionnement (12) dans laquelle la serrure (11) rend apte la libération d'un tel ouvrant,
- une commande d'ouverture d'un tel ouvrant, notamment une commande d'ouverture extérieure (4),
- une tringle de transmission (20) de mouvement comprenant une première partie (21) reliée à la commande d'ouverture d'un tel ouvrant et une deuxième partie (22) reliée au levier d'actionnement (12) de la serrure (11), où la tringle de transmission (20) et/ou le levier d'actionnement (12) sont agencés de sorte qu'en cas de choc (F) sur une paroi d'un tel ouvrant, notamment en cas de choc (F) sur un panneau extérieur (3) d'un tel ouvrant, le levier d'actionnement (12) est entraîné dans le premier sens, la première partie (21) de la tringle de transmission (20) présente un angle (a) par rapport à la deuxième partie (22) de la tringle de transmission (20) de sorte à ce qu'un choc (F) sur une paroi d'un tel ouvrant engendre un déplacement et/ou un effort sur la tringle de transmission (20), **caractérisé en ce qu'**en cas de choc (F) l'angle (α) se ferme davantage ou s'ouvrant davantage de sorte à entraîner le levier d'actionnement (12) de la serrure (11) dans le premier sens.

2. Agencement (10) selon la revendication précédente, **caractérisé en ce que** la première partie (21) de la tringle de transmission (20) présente une première extrémité (23) pliée à 90 degrés ou sensiblement à 90 degrés.

3. Agencement (10) selon l'une des revendications précédentes, **caractérisé en ce que** la deuxième partie (22) de la tringle de transmission (20) présente une deuxième extrémité (24) pliée en U.

4. Agencement (10) selon l'une des revendications précédentes, **caractérisé en ce que** le levier d'actionnement (12) comprend une tête (14) de levier d'actionnement (12) disposée à l'opposé de la base du levier d'actionnement (12), la tête (14) étant dotée d'un orifice (15), notamment un orifice de type trou oblong, coopérant avec la deuxième partie (22) de la tringle de transmission (20), notamment la deuxième extrémité (24) pliée en U.

5. Agencement (10) selon l'une des revendications précédentes, **caractérisé en ce que** la tringle de transmission (20) est conformée de sorte que la première partie (21) et/ou la deuxième partie (22) de la tringle de transmission (20) s'étende parallèlement ou sensiblement parallèlement à une paroi d'un tel ouvrant.

6. Agencement (10) selon l'une des revendications précédentes, **caractérisé en ce que** la tringle de transmission (20), notamment la première partie (21) de la tringle de transmission (20), est conformée de sorte à s'étendre à une distance (d) comprise entre 5 mm et 15 mm d'une paroi d'un tel ouvrant.

7. Agencement (10) selon la revendication précédente, **caractérisé en ce que** l'angle (a) est un angle aigu.

8. Ouvrant, notamment ouvrant de véhicule automobile (1), notamment ouvrant de type porte latérale (2), comprenant une paroi d'ouvrant, notamment un panneau extérieur (3), **caractérisé en ce que** l'ouvrant comprend un agencement (10) selon l'une des revendications précédentes.

9. Véhicule, notamment véhicule automobile (1), **caractérisé en ce qu'**il comprend un ouvrant selon la revendication précédente ou un agencement (10) selon l'une des revendications 1 à 7.

10. Procédé de fonctionnement d'un ouvrant selon la revendication 8, **caractérisé en ce qu'**il comprend en cas de choc (F) sur l'ouvrant :
- une étape d'appui sur la paroi de l'ouvrant et de déformation de la paroi de l'ouvrant sous l'effet de l'appui,
- une étape de déplacement de la tringle de transmission (20) en conséquence de la déformation de la paroi de l'ouvrant, le déplacement entraînant le levier d'actionnement (12) dans le premier sens.

## Patentansprüche

1. Anordnung (10) für ein Öffnungselement, insbesondere ein Öffnungselement eines Kraftfahrzeugs (1), insbesondere ein Öffnungselement vom Typ einer Seitentür (2), wobei die Anordnung (10) umfasst:
- ein Schloss (11), welches das Öffnen eines solchen Öffnungselements steuert,
- einen Betätigungshebel (12) des Schlosses (11), der an einem Basisteil des Betätigungshebels (12) in einer ersten Richtung zu einer Ruheposition (PR) des Betätigungshebels (12) hin, in welcher das Schloss (11) ein solches Öffnungselement blockiert, und in einer zweiten Richtung zu einer Öffnungsposition (PO) des Betätigungshebels (12) hin, in welcher das Schloss (11) die Freigabe eines solchen Öffnungselements ermöglicht, schwenkt,
- eine Öffnungssteuerung eines solchen Öffnungselements, insbesondere eine äußere Öffnungssteuerung (4),
- ein Gestänge zur Übertragung (20) von Bewegung, das einen ersten Teil (21), der mit der Öffnungssteuerung eines solchen Öffnungselements verbunden ist, und einen zweiten Teil (22), der mit dem Betätigungshebel (12) des Schlosses (11) verbunden ist, umfasst,
wobei das Übertragungsgestänge (20) und/oder der Betätigungshebel (12) so gestaltet sind, dass im Fall eines Aufpralls (F) auf eine Wand eines solchen Öffnungselements, insbesondere im Fall eines Aufpralls (F) auf ein Außenpaneel (3) eines solchen Öffnungselements, der Betätigungshebel (12) in der ersten Richtung angetrieben wird und dass der erste Teil (21) des Übertragungsgestänges (20) einen Winkel (α) in Bezug auf den zweiten Teil (22) des Übertragungsgestänges (20) aufweist, derart, dass ein Aufprall (F) auf eine Wand eines solchen Öffnungselements eine Verlagerung und/oder eine Kraft, die auf das Übertragungsgestänge (20) einwirkt, erzeugt,
**dadurch gekennzeichnet, dass** im Fall eines Aufpralls (F) der Winkel (α) sich weiter schließt oder sich weiter öffnet, so dass der Betätigungshebel (12) des Schlosses (11) in der ersten Richtung angetrieben wird.

2. Anordnung (10) nach dem vorhergehenden Anspruch, **dadurch gekennzeichnet, dass** der erste Teil (21) des Übertragungsgestänges (20) ein erstes Ende (23) aufweist, das um 90 Grad oder im Wesentlichen um 90 Grad gebogen ist.

3. Anordnung (10) nach einem der vorhergehenden Ansprüche, **dadurch gekennzeichnet, dass** der zweite Teil (22) des Übertragungsgestänges (20) ein zweites Ende (24) aufweist, das U-förmig gebogen ist.

4. Anordnung (10) nach einem der vorhergehenden Ansprüche, **dadurch gekennzeichnet, dass** der Betätigungshebel (12) ein Kopfstück (14) des Betätigungshebels (12) umfasst, das gegenüber dem Basisteil des Betätigungshebels (12) angeordnet ist, wobei das Kopfstück (14) mit einer Öffnung (15) versehen ist, insbesondere mit einer Öffnung vom Typ eines Langlochs, die mit dem zweiten Teil (22) des Übertragungsgestänges (20) zusammenwirkt, insbesondere mit dem U-förmig gebogenen zweiten Ende (24) .

5. Anordnung (10) nach einem der vorhergehenden Ansprüche, **dadurch gekennzeichnet, dass** das Übertragungsgestänge (20) derart ausgebildet ist, dass sich der erste Teil (21) und/oder der zweite Teil (22) des Übertragungsgestänges (20) parallel oder im Wesentlichen parallel zu einer Wand eines solchen Öffnungselements erstrecken.

6. Anordnung (10) nach einem der vorhergehenden Ansprüche, **dadurch gekennzeichnet, dass** das Übertragungsgestänge (20), insbesondere der erste Teil (21) des Übertragungsgestänges (20), derart ausgebildet ist, dass es bzw. er sich in einem Abstand (d) zwischen 5 mm und 15 mm von einer Wand eines solchen Öffnungselements erstreckt.

7. Anordnung (10) nach dem vorhergehenden Anspruch, **dadurch gekennzeichnet, dass** der Winkel (α) ein spitzer Winkel ist.

8. Öffnungselement, insbesondere Öffnungselement eines Kraftfahrzeugs (1), insbesondere Öffnungselement vom Typ einer Seitentür (2), welches eine Wand des Öffnungselements umfasst, insbesondere ein Außenpaneel (3), **dadurch gekennzeichnet, dass** das Öffnungselement eine Anordnung (10) nach einem der vorhergehenden Ansprüche umfasst.

9. Fahrzeug, insbesondere Kraftfahrzeug (1), **dadurch gekennzeichnet, dass** es ein Öffnungselement nach dem vorhergehenden Anspruch oder eine Anordnung (10) nach einem der Ansprüche 1 bis 7 umfasst.

10. Verfahren zum Betrieb eines Öffnungselements nach Anspruch 8, **dadurch gekennzeichnet, dass** es im Fall eines Aufpralls (F) auf das Öffnungselement umfasst:
- einen Schritt des Drückens auf die Wand des Öffnungselements und der Verformung der Wand des Öffnungselements unter der Wirkung des Drückens,
- einen Schritt der Verlagerung des Übertragungsgestänges (20) infolge der Verformung der Wand des Öffnungselements, wobei die Verlagerung den Betätigungshebel (12) in der ersten Richtung antreibt.

## Claims

1. Arrangement (10) for an opening leaf, in particular an opening leaf of a motor vehicle (1), in particular an opening leaf of the side door (2) type, the arrangement (10) comprising:
- a lock (11) that controls the opening of such an opening leaf,
- an actuating lever (12) for actuating the lock (11) and that pivots, at a base of the actuating lever (12), in a first direction towards a rest position (PR) of the actuating lever (12), in which position the lock (11) blocks such an opening leaf, and in a second direction towards an open position (PO) of the actuating lever (12), in which position the lock (11) allows such an opening leaf to be released,
- a control for opening such an opening leaf, in particular an external opening control (4),
- a transmission rod (20) for transmitting movements, comprising a first part (21) connected to the control for opening such an opening leaf and a second part (22) connected to the actuating lever (12) for actuating the lock (11),
wherein the transmission rod (20) and/or the actuating lever (12) are arranged such that, in the event of an impact (F) against a wall of such an opening leaf, in particular in the event of an impact (F) against an external panel (3) of such an opening leaf, the actuating lever (12) is caused to move in the first direction, the first part (21) of the transmission rod (20) being at an angle (α) in relation to the second part (22) of the transmission rod (20) so that an impact (F) against a wall of such an opening leaf brings about a displacement and/or a force on the transmission rod (20), **characterized in that**, in the event of an impact (F), the angle (α) closes to a greater extent or opening to a greater extent so as to cause the actuating lever (12) of the lock (11) to move in the first direction.

2. Arrangement (10) according to the preceding claim, **characterized in that** the first part (21) of the transmission rod (20) has a first end (23) bent at 90 degrees or substantially at 90 degrees.

3. Arrangement (10) according to either of the preceding claims, **characterized in that** the second part (22) of the transmission rod (20) has a second end (24) bent into a U shape.

4. Arrangement (10) according to one of the preceding claims, **characterized in that** the actuating lever (12) comprises a head (14) of the actuating lever (12) that is disposed opposite the base of the actuating lever (12), the head (14) being provided with an orifice (15), in particular an orifice of the slotted hole type, cooperating with the second part (22) of the transmission rod (20), in particular the second end (24) that is bent into a U shape.

5. Arrangement (10) according to one of the preceding claims, **characterized in that** the transmission rod (20) is configured such that the first part (21) and/or the second part (22) of the transmission rod (20) extend/extends parallel or substantially parallel to a wall of such an opening leaf.

6. Arrangement (10) according to one of the preceding claims, **characterized in that** the transmission rod (20), in particular the first part (21) of the transmission rod (20), is configured to extend at a distance (d) of between 5 mm and 15 mm from a wall of such an opening leaf.

7. Arrangement (10) according to the preceding claim, **characterized in that** the angle (α) is an acute angle.

8. Opening leaf, in particular opening leaf of a motor vehicle (1), in particular opening leaf of the side door (2) type, comprising an opening leaf wall, in particular an external panel (3), **characterized in that** the opening leaf comprises an arrangement (10) according to one of the preceding claims.

9. Vehicle, in particular motor vehicle (1), **characterized in that** it comprises an opening leaf according to the preceding claim or an arrangement (10) according to one of Claims 1 to 7.

10. Method for operating an opening leaf according to Claim 8, **characterized in that** it comprises, in the event of an impact (F) against the opening leaf:
- a step of pressure against the wall of the opening leaf and of deformation of the wall of the opening leaf under the effect of the pressure,
- a step whereby the transmission rod (20) moves as a result of the deformation of the wall of the opening leaf, the displacement causing the actuating lever (12) to move in the first direction.
